# EUROPÄISCHE PATENTANMELDUNG

(11) **EP 2 876 511 A2**
(43) Veröffentlichungstag der Anmeldung: **27.05.2015**
(21) Anmeldenummer: 14185766.4
(22) Anmeldetag: 22.09.2014
(51) Int. Cl.: G05B 11/00

(54) **Vorrichtung zur Spannungsversorgung eines Sensors in einem Fahrzeug**

(30) Priorität: 06.11.2013 DE 102013222470
(71) Anmelder: ROBERT BOSCH GMBH, 70442 Stuttgart (DE)
(72) Erfinder: Frese, Volker, 71717 Beilstein (DE)

(57) **Zusammenfassung**

Die Erfindung betrifft eine Vorrichtung (1) zur Spannungsversorgung eines Sensors (30) in einem Fahrzeug, welches ein Bordnetz mit einer Bordnetzspannung (V_{B}) aufweist, mit einer Schalteinheit (20), welche den Sensor (30) über ein erstes Schaltelement (22) mit der Bordnetzspannung (V_{B}) verbindet. Erfindungsgemäß bildet eine Spannungsansteuerung (10) mit der Schalteinheit (20) einen Schaltvorregler mit einer niedrigen Schaltfrequenz im Bereich von unter 20KHz aus, welcher eine Betriebsspannung (V_{V}) des Sensors (30) im zulässigen Spannungsbereich zwischen einem Minimalwert und einem Maximalwert erzeugt, wobei die Spannungsansteuerung (10) das erste Schaltelement (22) sperrend schaltet und den Sensor (30) von der Bordnetzspannung (V_{B}) trennt, wenn die Betriebsspannung (V_{V}) den Maximalwert überschreitet, und wobei die Spannungsansteuerung (10) das erste Schaltelement (22) leitend schaltet und den Sensor (30) mit der Bordnetzspannung (V_{B}) verbindet, wenn die Betriebsspannung (V_{V}) den Minimalwert unterschreitet.

## Beschreibung

### Stand der Technik

Die Erfindung geht aus von einer Vorrichtung zur Spannungsversorgung eines Sensors in einem Fahrzeug nach der Gattung des unabhängigen Patentanspruchs 1.

In Bremssystemen von Personenkraftwagen (PKW) werden in der Regel ein Drehratensensor und ein Lenkwinkelsensor als zusätzliche Sensoren eingesetzt, welche aus einem 12V-Bordnetz versorgt werden. Meist übermitteln diese Sensoren ihre Signale über ein CAN (Controller Area Network) an ein korrespondierendes Steuergerät des Fahrzeugbremssystems. Beide Sensoren nehmen relativ wenig Strom (<100mA) auf, so dass in der Regel keine Gehäuse mit einer guten Wärmeabfuhr eingesetzt werden. Zur Regelung der Betriebsspannung der Sensoren werden meist Linearregler eingesetzt, welche die Bordnetzspannung auf die interne Betriebsspannung wandeln.

Für Bordnetze von Lastkraftwagen (LKW) mit Spannungen um ca. 24V und Spitzen von ca. 42V ergeben sich mit Linearregeln sehr hohe Wärmleistungen, welche abgeführt werden müssen. Dies ist in den Standardgehäusen von Drehratensensoren, Lenkwinkelsensoren usw., welche meist aus Kunststoff gefertigt sind, nicht möglich. Zur Reduzierung der Verlustleistung würde man deshalb den Linearregler durch einen Schaltregler ersetzen. Solche Schaltregler arbeiten in der heutigen Technologie im Frequenzbereich von ca. 200kHz bis ca. 1MHz. Ein Schaltregler in diesem Frequenzbereich hat je nach Schaltzeiten der Transistoren einen Wirkungsgrad im Bereich von 60 bis 80%. Zudem benötigen diese Schaltungen mindestens eine zusätzliche Drosselspule, meist aber zwei Drosselspulen, um die Bordnetzrückkopplung niedrig zu halten. Zudem müsste der Teil der Spannungsreglung vollständig ersetzt werden.

### Offenbarung der Erfindung

Die erfindungsgemäße Vorrichtung zur Spannungsversorgung eines Sensors in einem Fahrzeug mit den Merkmalen des unabhängigen Patentanspruchs 1 hat demgegenüber den Vorteil, dass für den PKW-Bereich ausgelegte Sensoren mit einer niedrigeren Betriebsspannung von ca. 12V im LKW-Bereich mit einer Bordnetzspannung von ca. 24V und Spitzen von ca. 42V eingesetzt werden können. Dadurch können in vorteilhafter Weise die Herstellungskosten reduziert werden.

Im Prinzip besteht die Erfindung aus einem Schaltvorregler mit einer sehr niedrigen Schaltfrequenz im Bereich von unter ca. 20KHz. Diese Schaltfrequenz ist daher mindestens um einen Faktor 10 niedriger als die Schaltfrequenzen von bisher in Fahrzeugen eingesetzten Schaltreglern. Dies ist möglich, da die Sensoren meist wenig Strom ziehen. Zudem ist die Funktionsfähigkeit der Sensoren so ausgelegt, dass sie mindestens 1 ms ohne Stromversorgung auskommen können. Dadurch kann die Schaltfrequenz des Schaltvorreglers in vorteilhafter Weise auf einer Frequenz von unter 1 KHz reduziert werden. Zudem ist die Funktionsfähigkeit der Sensoren so ausgelegt, dass jegliche Spannungsvariation innerhalb des zulässigen Spannungsbereichs von normalerweise 7 bis 16V ohne Leistungseinbußen möglich ist. Daher muss die Betriebsspannung der Sensoren nicht konstant sein, sondern kann im zulässigen Spannungsbereich variieren.

Ausführungsformen der vorliegenden Erfindung weisen in vorteilhafter Weise eine geringere Wärmeleistung als herkömmliche Schaltregler und Linearregler auf. Für Linearregler versteht es sich von selbst, da diese die überflüssige Spannung in Wärme umwandeln würden. Die herkömmlichen Schaltregler schalten viel häufiger und erzeugen durch das viel häufigere Schalten in einer korrespondierenden Freilaufdiode Abwärme, die abgeleitet werden muss. Da beispielsweise bei Verwendung eines Feldeffekttransistors quasi keine Wärme im Schalter erzeugt wird, können sehr kleine Bauformen eingesetzt werden. Diese sind auch meist kostengünstiger und weisen eine geringere Fläche. So dass trotz einer zusätzlichen Spannungsansteuerung auch die Gehäuse der aus dem PKW-Bereich bekannten Sensoren verwendet werden können.

Ausführungsformen der vorliegenden Erfindung stellen eine Vorrichtung zur Spannungsversorgung eines Sensors in einem Fahrzeug zur Verfügung, welches ein Bordnetz mit einer Bordnetzspannung aufweist. Die Spannungsversorgungsvorrichtung umfasst eine Schalteinheit, welche den Sensor über ein erstes Schaltelement mit der Bordnetzspannung verbindet. Erfindungsgemäß bildet eine Spannungsansteuerung mit der Schalteinheit einen Schaltvorregler mit einer niedrigen Schaltfrequenz im Bereich von unter 20KHz aus, welcher eine Betriebsspannung des Sensors im zulässigen Spannungsbereich zwischen einem Minimalwert und einem Maximalwert erzeugt. Die Spannungsansteuerung schaltet das erste Schaltelement sperrend und trennt den Sensor von der Bordnetzspannung, wenn die Betriebsspannung den Maximalwert überschreitet. Die Spannungsansteuerung schaltet das erste Schaltelement leitend und verbindet den Sensor mit der Bordnetzspannung, wenn die Betriebsspannung den Minimalwert unterschreitet.

Durch die in den abhängigen Ansprüchen aufgeführten Maßnahmen und Weiterbildungen sind vorteilhafte Verbesserungen der im unabhängigen Patentanspruch 1 angegebenen Vorrichtung zur Spannungsversorgung eines Sensors in einem Fahrzeugmöglich.

Besonders vorteilhaft ist, dass ein RC-Glied aus einem zwischen der Bordnetzspannung und dem ersten Schaltelement angeordnetem Vorwiderstand und einer Energiereserve des Sensors einen Aufladevorgang der Energiereserve und somit die Einschaltzeit des ersten Schaltelements bestimmen kann. Die Ausschaltzeit des ersten Schaltelements kann über die Kapazität der Energiereserve und den Stromverbrauch des Sensors bestimmt werden. Somit wirkt dieses RC-Glied in vorteilhafter Weise als Dämpfung der Schaltzyklen und minimiert die Oszillationsfrequenz. Daher bestimmt das RC-Glied zusammen mit dem Stromverbrauch des Sensors 20 die niedrige Schaltfrequenz des ersten Schaltelements 22. Zudem kann der Vorwiderstand einen Ladestrom der Energiereserve des Sensors während einer Einschaltdauer des erstens Schaltelements begrenzen. In einer geeigneten Ausführung kann der Vorwiderstand auch als Kurzschlusssicherung dienen, wenn dieser Widerstand im Überlastfall hochohmig wird.

In vorteilhafter Ausgestaltung der erfindungsgemäßen Vorrichtung umfasst die Spannungsansteuerung einen Vergleicher, welcher die Betriebsspannung des Sensors mit einer Referenzspannung vergleicht und in Abhängigkeit des Vergleichs ein Ansteuersignal für das erste Schaltelement erzeugt und ausgibt. Der Vergleicher ist vorzugsweise als Differenzverstärker mit einem invertierenden Eingang, an welchem die Referenzspannung anliegt, und einem nicht invertierenden Eingang ausgeführt, an welchem die Betriebsspannung des Sensors anliegt. Der Ausgang des Differenzverstärkers ist mit der Schalteinheit verbunden ist. Des Weiteren kann eine Rückkopplung zwischen dem Ausgang und dem nicht invertierenden Eingang des Differenzverstärkers eine Schalthysterese des Vergleichers einstellen, welche den zulässigen Spannungsbereich der Betriebsspannung des Sensors repräsentiert. Somit trennt das erste Schaltelement in Kooperation mit dem Vergleicher und der Rückkopplung den Sensor von der Bordnetzspannung, wenn die Betriebsspannung des Sensors den Maximalwert überschreitet, und verbindet den Sensor wieder mit der Bordnetzspannung, wenn die Betriebsspannung des Sensors den Minimalwert unterschreitet.

In weiterer vorteilhafter Ausgestaltung der erfindungsgemäßen Vorrichtung kann das erste Schaltelement als PMOS-Feldeffekttransistor ausgeführt werden. Dadurch kann die Verlustleistung am Schalter in vorteilhafter Weise niedrig gehalten werden. Zudem ist keine zusätzliche Ladepumpenschaltung erforderlich.

In weiterer vorteilhafter Ausgestaltung der erfindungsgemäßen Vorrichtung kann ein Spannungsteiler eine Gate-Source-Spannung des PMOS-Feldeffekttransistors begrenzen. Um das erste Schaltelement auch ohne Ansteuersignal von der Spannungsansteuerung öffnen zu können, steuert ein zweites Schaltelement in der Schalteinheit das erste Schaltelement während einer Einschaltphase des Bordnetzes an. Ein drittes Schaltelement in der Schalteinheit kann das von der Spannungsansteuerung ausgegebene Ansteuersignal invertieren und die hohe Bordnetzspannung anpassen.

Ein Ausführungsbeispiel der Erfindung ist in den Zeichnungen dargestellt und wird in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt ein schematisches Blockschaltbild eines Ausführungsbeispiels einer erfindungsgemäßen Vorrichtung zur Spannungsversorgung eines Sensors in einem Fahrzeug.
Fig. 2 zeigt ein schematisches Blockschaltbild eines Ausführungsbeispiels einer Spannungsansteuerung für die erfindungsgemäße Vorrichtung zur Spannungsversorgung eines Sensors in einem Fahrzeug aus Fig. 1.
Fig. 3 zeigt ein schematisches Blockschaltbild eines Ausführungsbeispiels einer Schalteinheit für die erfindungsgemäße Vorrichtung zur Spannungsversorgung eines Sensors in einem Fahrzeug aus Fig. 1.

### Ausführungsformen der Erfindung

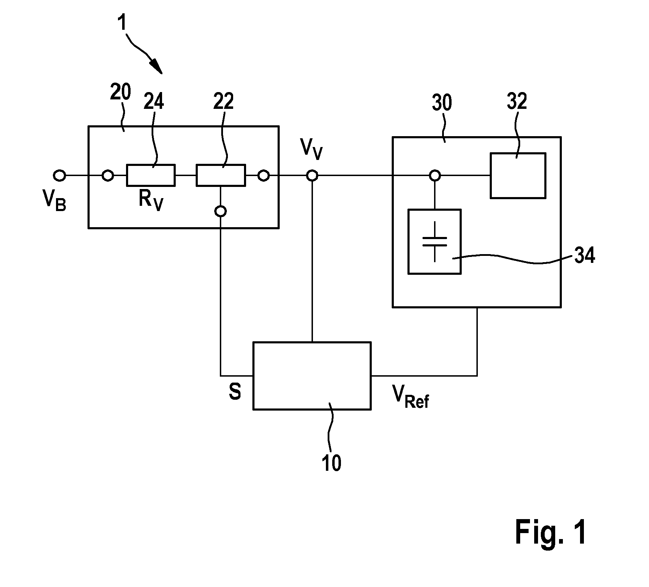

Wie aus Fig. 1 bis 3 ersichtlich ist, umfasst das dargestellte Ausführungsbeispiel einer erfindungsgemäßen Vorrichtung 1 zur Spannungsversorgung eines Sensors 30 in einem Fahrzeug eine Schalteinheit 20, welche den Sensor 30 über ein erstes Schaltelement 22 mit einer Bordnetzspannung V_{B} verbindet, welche von einem nicht näher dargestellten Fahrzeugbordnetz zur Verfügung gestellt wird. Erfindungsgemäß bildet eine Spannungsansteuerung 10 mit der Schalteinheit 20 einen Schaltvorregler mit einer niedrigen Schaltfrequenz im Bereich von unter 20KHz aus, welcher eine Betriebsspannung V_{V} des Sensors 30 im zulässigen Spannungsbereich zwischen einem Minimalwert und einem Maximalwert erzeugt. Die Spannungsansteuerung 10 schaltet das erste Schaltelement 22 sperrend und trennt den Sensor 30 von der Bordnetzspannung V_{B}, wenn die Betriebsspannung V_{V} den Maximalwert überschreitet. Die Spannungsansteuerung 10 schaltet das erste Schaltelement 22 leitend und verbindet den Sensor 30 mit der Bordnetzspannung V_{B}, wenn die Betriebsspannung V_{V} den Minimalwert unterschreitet. Die Bordnetzspannung V_{B} liegt in einem LKW bei ca. 24V und weist Spitzen von ca. 42V auf. Durch Ausführungsformen der erfindungsgemäßen Vorrichtung zur Spannungsversorgung eines Sensors in einem Fahrzeug können herkömmliche für das 12V-Bordnetz eines PKWs ausgelegte Sensoren, wie beispielsweise Drehratensensoren, Lenkwinkelsensoren usw., in vorteilhafter Weise auch in 24V-Bordnetzen von LKWs eingesetzt werden.

Wie aus Fig. 1 weiter ersichtlich ist, besteht die Erfindung im Prinzip aus einem Schaltvorregler mit sehr niedriger Frequenz, welcher aus der Spannungsansteuerung 10 und der Schalteinheit 20 gebildet wird und die Betriebsspannung V_{V} für den Sensor 30 zur Verfügung stellt, welcher für ein Bordnetz mit einer deutlich niedrigeren Spannung ausgelegt ist. Zur Umsetzung werden für die Betriebsspannung V_{V} des Sensors 30 ein Minimalwert von ca. 7V und ein Maximalwert von ca. 16V vorgegeben. In Kooperation mit der Spannungsansteuerung 10 trennt die Schalteinheit 20 den Sensors von der Bordnetzspannung V_{B}, wenn die Betriebsspannung V_{V} des Sensors 30 den Maximalwert überschreitet, und verbindet den Sensor 30 wieder mit der Bordnetzspannung V_{B}, wenn die Betriebsspannung V_{V} des Sensors 30 den Minimalwert unterschreitet. Zusätzlich ist zwischen der Bordnetzspannung U_{B} und dem ersten Schaltelement 22 ein Vorwiderstand R_{V}, welcher einen Ladestrom einer Energiereserve 34 des Sensors 30 während einer Einschaltdauer des erstens Schaltelements 22 begrenzt. Die Energiereserve 34 des Sensors 30 ist vorzugsweise als hochwertiger Kondensator ausgeführt. Zusammen mit der Energiereserve 34 des Sensors 30 wirkt der Vorwiderstand R_{V} als RC-Glied, welches den Aufladevorgang der Energiereserve 34 und somit die Einschaltzeit des ersten Schaltelements 22 bestimmt. Die Ausschaltzeit des ersten Schaltelements 22 wird über die Kapazität der Energiereserve 34 und den Stromverbrauch des Sensors 30 bestimmt. Somit bestimmt das RC-Glied zusammen mit dem Stromverbrauch des Sensors 20 die niedrige Schaltfrequenz des ersten Schaltelements 22. Zudem dient der Vorwiderstand R_{V} im dargestellten Ausführungsbeispiel auch als Kurzschlusssicherung.

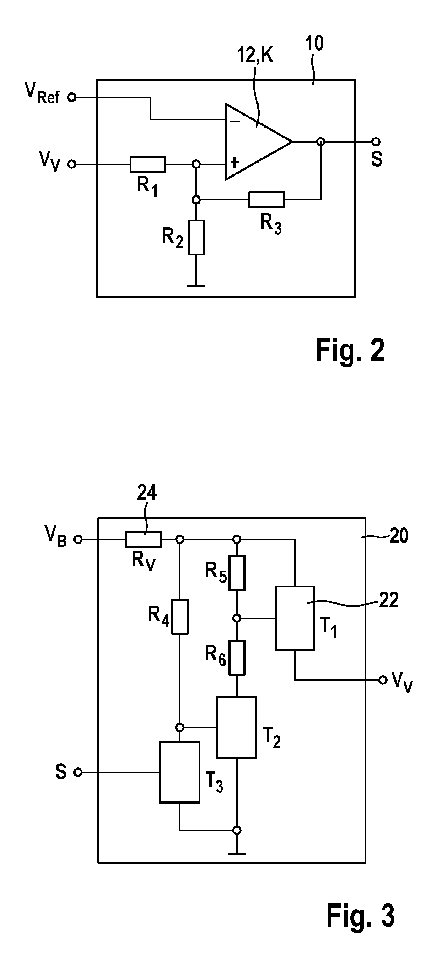

Wie aus Fig. 2 weiter ersichtlich ist, umfasst die Spannungsansteuerung 10 einen als Differenzverstärker K ausgeführten einfachen Vergleicher 12, welcher die Betriebsspannung V_{V} des Sensors 30 mit einer Referenzspannung V_{Ref} vergleicht. Der als Differenzverstärker K ausgeführte Vergleicher 12 umfasst einen invertierenden Eingang (-), an welchem die Referenzspannung V_{Ref} anliegt, und einen nicht invertierenden Eingang (+), an welchem die Betriebsspannung U_{V} des Sensors 30 anliegt, wobei der Ausgang des Differenzverstärkers K mit einem Ansteuereingang des ersten Schaltelements 22 der Schalteinheit 20 verbunden ist. Im dargestellten Ausführungsbeispiel umfasst die Spannungsansteuerung 10 einen Spannungsteiler R1, R2, welcher die Betriebsspannung V_{V} für den Sensor 30 auf das Niveau der Referenzspannung V_{Ref} heruntergeteilt. Ist die heruntergeteilte Betriebsspannung V_{V} für den Sensor 30 größer als die Referenzspannung V_{Ref}, dann wechselt ein Ansteuersignal S auf einen maximalen Spannungspegel des Vergleichers 12. Dadurch wird das erste Schaltelement 22 der Schalteinheit 20 geöffnet bzw. hochohmig geschaltet. Ist die heruntergeteilte Betriebsspannung V_{V} für den Sensor 30 kleiner als die Referenzspannung V_{Ref}, dann wechselt das Ansteuersignal S auf einen niedrigen Spannungspegel von beispielsweise 0V. Dadurch wird das erste Schaltelement 22 der Schalteinheit 20 geschlossen bzw. niederohmig geschaltet. Eine Rückkopplung R3 zwischen dem Ausgang und dem nicht invertierenden Eingang (+) des Differenzverstärkers K stellte eine Schalthysterese des Vergleichers 12 ein, welche den zulässigen Spannungsbereich der Betriebsspannung U_{V} des Sensors 30 repräsentiert.

Wie aus Fig. 3 weiter ersichtlich ist, umfasst die Schalteinheit 20 neben dem ersten Schaltelement 22, welches vorzugsweise als P-Kanal Feldeffekttransistor (FET) T1 ausgeführt ist, um die Verlustleistung möglichst niedrig zu halten und ohne eine zusätzliche Ladungspumpe auszukommen, und dem Vorwiderstand R_{V} einen Spannungsteiler R5, R6, welche eine Gate-Source-Spannung des als PMOS- Feldeffekttransistor T1 ausgeführten ersten Schaltelements 22 begrenzt. Über einen weiteren ohmschen Widerstand R4 und ein zweites Schaltelement T2, welches beispielsweise als Bipolar-Transistor oder Feldeffekttransistor (FET) ausgeführt ist, kann das erste Schaltelement 22 beispielsweise beim Einschalten der Bordnetzspannung V_{B} ohne anliegendes Ansteuersignal S geöffnet bzw. hochohmig geschaltet werden. Ein drittes Schaltelement T3, welches beispielsweise als Bipolar-Transistor oder Feldeffekttransistor (FET) ausgeführt ist, invertiert das Ansteuersignal S und passt es an die hohe Bordnetzspannung V_{B} an. Weist das Ansteuersignal S den maximalen Spannungspegel des Vergleichers 12 auf, dann ist das als PMOS-Feldeffekttransistor T1 ausgeführte erste Schaltelement 22 geöffnet bzw. hochohmig geschaltet. Weist das Ansteuersignal S den niedrigen Spannungspegel von kleiner 0,5V auf, dann ist das als PMOS-FET T1 ausgeführte erste Schaltelement 22 geschlossen bzw. niederohmig geschaltet.

## Patentansprüche

1. Vorrichtung zur Spannungsversorgung eines Sensors in einem Fahrzeug, welches ein Bordnetz mit einer Bordnetzspannung (V_{B}) aufweist, mit einer Schalteinheit (20), welche den Sensor (30) über ein erstes Schaltelement (22) mit der Bordnetzspannung (V_{B}) verbindet, **dadurch gekennzeichnet, dass** eine Spannungsansteuerung (10) mit der Schalteinheit (20) einen Schaltvorregler mit einer niedrigen Schaltfrequenz im Bereich von unter 20KHz ausbildet, welcher eine Betriebsspannung (V_{V}) des Sensors (30) im zulässigen Spannungsbereich zwischen einem Minimalwert und einem Maximalwert erzeugt, wobei die Spannungsansteuerung (10) das erste Schaltelement (22) sperrend schaltet und den Sensor (30) von der Bordnetzspannung (V_{B}) trennt, wenn die Betriebsspannung (V_{V}) den Maximalwert überschreitet, und wobei die Spannungsansteuerung (10) das erste Schaltelement (22) leitend schaltet und den Sensor (30) mit der Bordnetzspannung (V_{B}) verbindet, wenn die Betriebsspannung (V_{V}) den Minimalwert unterschreitet.

2. Vorrichtung nach Anspruch 1, **dadurch gekennzeichnet, dass** ein zwischen der Bordnetzspannung (V_{B}) und dem ersten Schaltelement (22) angeordneter Vorwiderstand (R_{V}) einen Ladestrom einer Energiereserve (34) des Sensors (30) während einer Einschaltdauer des erstens Schaltelements (22) begrenzt.

3. Vorrichtung nach Anspruch 2, **dadurch gekennzeichnet, dass** ein RC-Glied aus dem Vorwiderstand (R_{V}) und der Energiereserve (34) des Sensors (30) zusammen mit einem Stromverbrauch des Sensors (30) die niedrige Schaltfrequenz bestimmt.

4. Vorrichtung nach einem der Ansprüche 1 bis 3, **dadurch gekennzeichnet, dass** die Spannungsansteuerung (10) einen Vergleicher (12) umfasst, welcher die Betriebsspannung (V_{V}) des Sensors (30) mit einer Referenzspannung (V_{Ref}) vergleicht und in Abhängigkeit des Vergleichs ein Ansteuersignal (S) für das erste Schaltelement (22) erzeugt und ausgibt.

5. Vorrichtung nach Anspruch 4, **dadurch gekennzeichnet, dass** der Vergleicher (12) als Differenzverstärker (K) mit einem invertierenden Eingang (-), an welchem die Referenzspannung anliegt, und einem nicht invertierenden Eingang (+) ausgeführt ist, an welchem die Betriebsspannung (V_{V}) des Sensors (30) anliegt, wobei der Ausgang des Differenzverstärkers (K) mit der Schalteinheit (20) verbunden ist.

6. Vorrichtung nach Anspruch 5, **dadurch gekennzeichnet, dass** ein Rückkopplung (R₃) zwischen dem Ausgang und dem nicht invertierenden Eingang (+) des Differenzverstärkers (K) eine Schalthysterese des Vergleichers (12) einstellt, welche den zulässigen Spannungsbereich der Betriebsspannung (V_{V}) des Sensors (30) repräsentiert.

7. Vorrichtung nach einem der Ansprüche 1 bis 6, **dadurch gekennzeichnet, dass** das erste Schaltelement (22) als PMOS-Feldeffekttransistor (T1) ausgeführt ist.

8. Vorrichtung nach Anspruch 7, **dadurch gekennzeichnet, dass** ein Spannungsteiler (R₅, R₆) eine Gate-Source-Spannung des PMOS-Feldeffekttransistors (T1) begrenzt.

9. Vorrichtung nach einem der Ansprüche 1 bis 8, **dadurch gekennzeichnet, dass** ein zweites Schaltelement (T2) in der Schalteinheit (20) das erste Schaltelement (22) während einer Einschaltphase des Bordnetzes ansteuert.

10. Vorrichtung nach einem der Ansprüche 1 bis 9, **dadurch gekennzeichnet, dass** ein drittes Schaltelement (T3) in der Schalteinheit (20) das von der Spannungsansteuerung (10) ausgegebene Ansteuersignal (S) invertiert.
